# EUROPEAN PATENT APPLICATION

(11) **EP 4 489 024 A1**
(43) Date of publication of application: **08.01.2025**
(21) Application number: 23763603.0
(22) Date of filing: 05.01.2023
(51) Int. Cl.: G21C 3/32, G21C 11/06

(54) **SMALL MODULAR REACTOR INCLUDING SMALL FUEL ASSEMBLIES**

(30) Priority: 02.03.2022 KR 20220026645
(71) Applicant: Korea Hydro & Nuclear Power Co., Ltd, Gyeongju-si, Gyeongsangbuk-do 38120 (KR)
(72) Inventor: LEE, Eun Ki, Daejeon 34101 (KR); JO, Yu Gwon, Daejeon 34101 (KR)
(74) Representative: Habermann, Hruschka & Schnabel
(86) International application number: PCT/KR2023/000217
(87) International publication number: WO 2023/167404

(57) **Abstract**

The present invention relates to a small modular reactor including small fuel assemblies. The small modular reactor comprises: a reactor body; and a nuclear fuel material which is accommodated in the reactor body, includes a plurality of fuel assemblies, and has a section arrangement region. The section arrangement region includes a first arrangement region and a plurality of second arrangement regions that are located outside the first arrangement region and spaced apart from each other. The fuel assemblies include: first nuclear fuel assemblies that each have a first size and are closely arranged in the first arrangement region; and second nuclear fuel assemblies that each have a second size smaller than the first size and are arranged in the second arrangement region.

## Description

### Technical Field

The disclosure relates to a small modular nuclear power plant with a small fuel assembly.

### Background Art

A fuel assembly used in the existing small modular reactor (SMR) nuclear power plant has a square shape with each side measuring about 20cm, and includes 15x15, 16x16, or 17x17 fuel rods loaded therein.

When such fuel assemblies are loaded into a cylindrical core vessel of the SMR nuclear power plant, the fuel assemblies are arranged in specific forms according to the outputs or sizes of the SMR.

A similar loading form is also used in the existing commercial pressurized water reactor (PWR), but the design thereof is easy because the number of fuel assemblies is as large as 177 to 241.

On the other hand, the number of assemblies for the small modular reactor (SMR) is merely 37 to 64. Therefore, the control rod assemblies are required to be installed above most fuel in order to control the output, and high neutron leakage reduces fuel efficiency, thereby causing a problem that a cycle length is shortened.

To solve this problem, there have been proposed a method of increasing concentration, and a method of using a burnable poison rod. However, such methods should go through verification over a long period of time in terms of fuel manufacturability, etc.

### Disclosure

### Technical Problem

Accordingly, an aspect of the disclosure is to provide a small modular nuclear power plant with a small fuel assembly.

### Technical Solution

The aspect of the disclosure is achieved by a small modular nuclear power plant with small fuel assemblies, including: a reactor main body; and a nuclear fuel element accommodated in the reactor main body, including a plurality of fuel assemblies, and having a cross-sectional arrangement area, the cross-sectional arrangement area including: a first arrangement area; and a plurality of second arrangement areas located in a perimetric region of the first arrangement area and spaced apart from each other, and the fuel assemblies including: first nuclear fuel assemblies each having a first size and densely arranged in the first arrangement area; and second nuclear fuel assemblies each having a second size smaller than the first size and arranged in the second arrangement areas.

Each of the fuel assemblies may be shaped like an elongated rectangular parallelepiped having a quadrangular cross-section, and a cross-sectional size of the second nuclear fuel assembly may be 15% to 50% of a cross-sectional size of the first nuclear fuel assembly.

Each of the fuel assembles may have a square cross-section, and a cross-sectional size of the second nuclear fuel assembly may be 20 % to 30% of a cross-sectional size of the first nuclear fuel assembly.

The perimetric region of the first arrangement area may include a corner region in which the first nuclear fuel assemblies are arranged in a stepped form, and the second arrangement areas may be arranged to face two first nuclear fuel assemblies making up the corner region.

The small modular reactor may further include a reflector located between the nuclear fuel element and the reactor main body, wherein the second nuclear fuel assembly includes a plurality of fuel rods and a plurality of stainless-steel rods, and the stainless-steel rods are arranged to face the reflector.

The small modular reactor may further include: a reflector located between the nuclear fuel element and the reactor main body; and an ex-vessel instrument located outside the reactor main body and placed to be adjacent to the second nuclear fuel assemblies, wherein the second nuclear fuel assembly includes a plurality of fuel rods and a plurality of stainless-steel rods, and the stainless-steel rods are placed to face the reflector, but not placed in a region via which a center region of the ex-vessel instrument and a center region of the second nuclear fuel assembly are connected.

The small modular reactor may further include either a guiding tube for guiding a control rod to be inserted or an in-vessel instrument, which is installed in the second nuclear fuel assembly.

The aspect of the disclosure may be achieved by a small modular reactor (SMR) with small fuel assemblies, including: a reactor main body; and a nuclear fuel element accommodated in the reactor main body, including a plurality of fuel assemblies, and having a cross-sectional arrangement area, the fuel assembly including: a first nuclear fuel assembly; and a second nuclear fuel assembly having a smaller cross-sectional area than the first nuclear assembly, the cross-sectional arrangement area including: a first arrangement area in which the first nuclear fuel assemblies are arranged; and a plurality of second arrangement areas, in which the second nuclear fuel assemblies are arranged, and which are located in a perimetric region of the first arrangement area and spaced apart from each other, the first arrangement area has a circumference including: a straight section in which the second nuclear fuel assemblies are arranged in a row; and a stepped section in which the second nuclear fuel assemblies are arranged in a stepped form, and the second arrangement area is located in the corner region.

### Advantageous Effects

According to the disclosure, there is provided a small modular nuclear power plant with small fuel assemblies.

### Description of Drawings

FIG. 1 illustrates a small modular nuclear power plant according to a first embodiment of the disclosure,
FIG. 2 is a cross-sectional view taken along line II-II' in FIG. 1,
FIG. 3 is an enlarged view of a C portion in FIG. 2,
FIG. 4 illustrates a second nuclear fuel assembly in a small modular nuclear power plant according to a second embodiment of the disclosure,
FIG. 5 illustrates a second nuclear fuel assembly in a small modular nuclear power plant according to a third embodiment of the disclosure,
FIG. 6 illustrates a second nuclear fuel assembly in a small modular nuclear power plant according to a fourth embodiment of the disclosure,
FIG. 7 illustrates a nuclear fuel element in the small modular nuclear power plant according to the fourth embodiment of the disclosure,
FIG. 8 illustrates a second nuclear fuel assembly in a small modular nuclear power plant according to a fifth embodiment of the disclosure, and
FIG. 9 illustrates a nuclear fuel element in the small modular nuclear power plant according to the fifth embodiment of the disclosure.

### Mode for Invention

The disclosure uses a small fuel assembly having the same shape as the existing fuel assembly, but capable of increasing a cycle length, giving flexibility in setting a control rod location, and improving the performance of a neutron flux monitoring system.

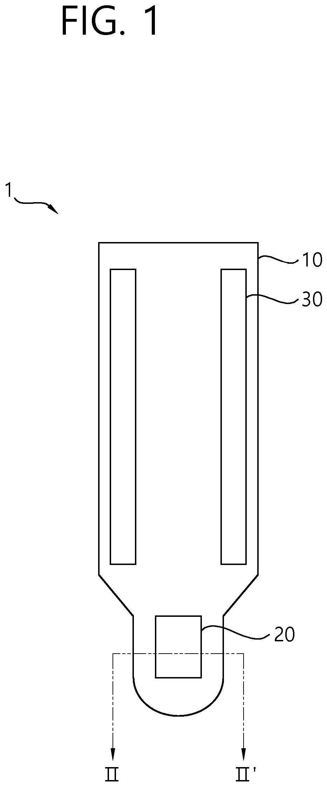

A small modular nuclear power plant according to a first embodiment of the disclosure will be described with reference to FIGS. 1 to 3.

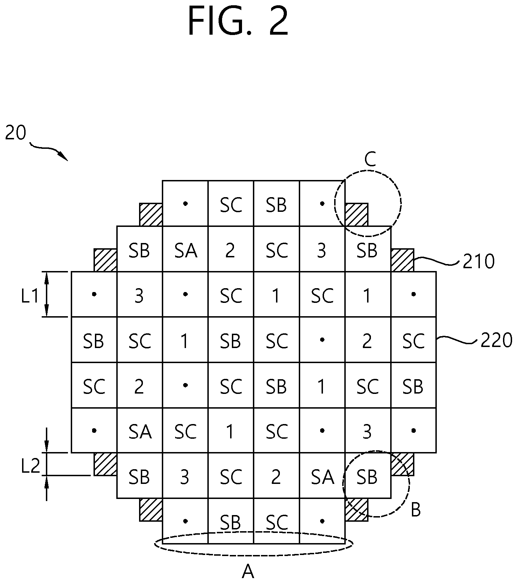

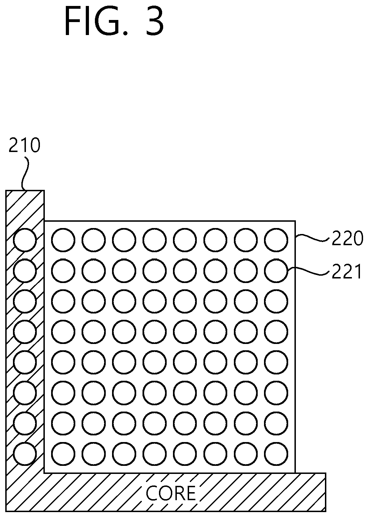

FIG. 1 illustrates a small modular nuclear power plant according to a first embodiment of the disclosure, FIG. 2 is a cross-sectional view taken along line II-II' in FIG. 1, and FIG. 3 is an enlarged view of a C portion in FIG. 2.

A small modular nuclear power plant 1 includes a reactor main body 10, a nuclear fuel element 20, and a steam generator 30.

Although not shown, the small modular nuclear power plant 1 may further include a shroud and/or riser to adjust the flow of the cooling water. Further, the small modular nuclear power plant 1 may further include a control rod to control the reactivity of the nuclear fuel element 20.

As the cooling water rises and passes through the nuclear fuel element 20, the cooling water is heated by the nuclear fuel element 20. The heated cooling water moves to a lower portion of the nuclear fuel element 20 as being cooled by exchanging heat with the steam generator 30 while falling down, and is then supplied again to the nuclear fuel element 20.

The flow of the cooling water may be controlled using a pump or through natural circulation.

The nuclear fuel element 20, which is also called a core, includes a first nuclear fuel assembly 210 and a second nuclear fuel assembly 220. Each of the fuel assemblies 210 and 220 is shaped like an elongated rectangular parallelepiped of which the cross-section in a horizontal direction is square, and in which fuel rods 221 are arranged in a matrix form.

According to the disclosure, the cross-section or the cross-sectional area refers to a cross-section or a cross-sectional area in the horizontal direction, which is a cross-section in a direction transverse to a vertical direction, when the lengthwise direction of the reactor main body 10 is considered as the vertical direction.

The length L1 of one side of the first nuclear fuel assembly 210 is about twice the length L2 of one side of the second nuclear fuel assembly 220, and the cross-sectional area of the second nuclear fuel assembly 220 is about 25% of that of the first nuclear fuel assembly 210. According to another embodiment, the length L1 of one side of the first nuclear fuel assembly 210 may be 1.3 to 4 times or 1.5 to 2.5 times the length L2 of one side of the second nuclear fuel assembly 220. Alternatively, the cross-sectional area of the second nuclear fuel assembly 220 may be 15% to 50% or 20% to 30% of the cross-sectional area of the first nuclear fuel assembly 210. According to still another embodiment, the cross-section of the second nuclear fuel assembly 220 may be rectangular or triangular rather than square.

In the first embodiment, there are provided 52 first nuclear fuel assemblies 210, and 8 second nuclear fuel assemblies 220. The area where the first nuclear fuel assembly 210 is located will be referred to as a first arrangement area, and the area where the second nuclear fuel assembly 220 is located will be referred to as a second arrangement area.

The first nuclear fuel assemblies 210 are densely arranged to have a roughly circular shape. The circumference of the first arrangement area includes a straight section like A and a stepped section like B.

The second nuclear fuel assembly 220 is arranged to be in contact with both two adjacent first nuclear fuel assemblies 210 in the stepped section. With the second nuclear fuel assembly 220, the nuclear fuel element 20 becomes more similar to a circle.

The second nuclear fuel assembly 220 includes 8*8 fuel rods 221. The first nuclear fuel assembly 210 may include 16*16 fuel rods 221, but some fuel rods 221 are replaced by control rods 1 to SD or in-vessel instrumentation assemblies (marked with dots). The control rods marked with numerals of 1 to 4 are to control the reactor, and those marked with S, such as SA to SD, are to stop the reactor.

In the first embodiment, the control rod or the in-vessel instrument is placed in every first nuclear fuel assembly 210.

According to the disclosure, the small second nuclear fuel assembly 220 may be additionally loaded into a perimetric region of the first nuclear fuel assembly 210, where the nuclear fuel has not been loaded.

In the foregoing first embodiment described above, the second nuclear fuel assembly 220 may be modified in various ways, which will be described according to the second to fifth embodiments.

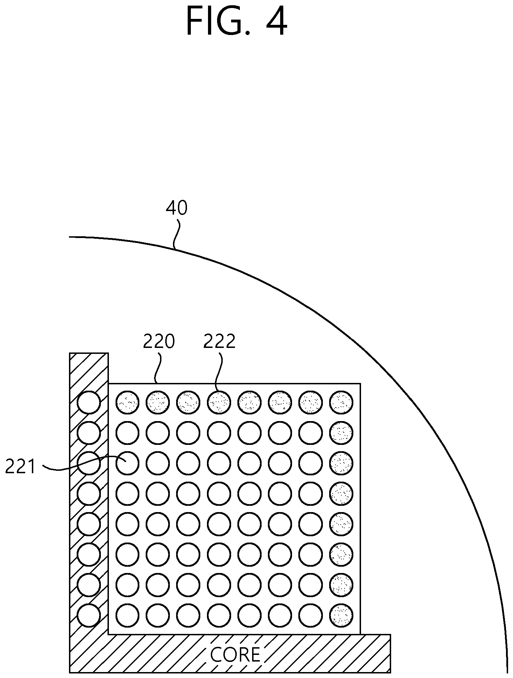

FIG. 4 illustrates a second nuclear fuel assembly in a small modular nuclear power plant according to a second embodiment of the disclosure,

In the second embodiment, the small modular nuclear power plant 1 further includes a reflector 40. The reflector 40 surrounds the nuclear fuel element 20 within the reactor main body 10 and reflects neutrons irradiated from the nuclear fuel element 20 back to the nuclear fuel element 20.

The second nuclear fuel assembly 220 includes the fuel rods 221 and stainless-steel rods 222, and the stainless-steel rods 222 are arranged in the perimetric region to face the reflector 40.

According to the disclosure, the added nuclear fuel may increase neutron fluence in the reactor main body 10. According to the second embodiment, the stainless-steel rods 222 located in the region facing the reflector 40 serves as a shield to reduce the neutron fluence applied to the reactor main body 10.

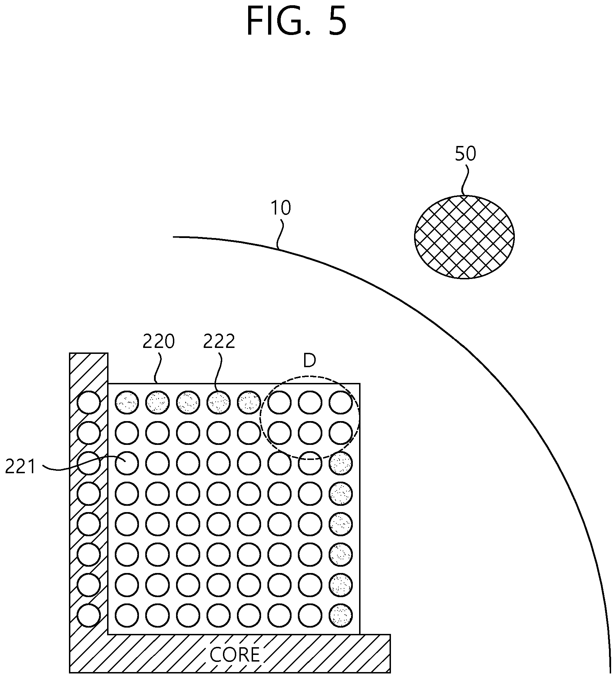

FIG. 5 illustrates a second nuclear fuel assembly in a small modular nuclear power plant according to a third embodiment of the disclosure,

In the third embodiment, the small modular nuclear power plant 1 further includes ex-vessel instrument 50. The ex-vessel instrument 50 is located outside the reactor main body 10 and monitors neutrons irradiated from the nuclear fuel element 20.

The second nuclear fuel assembly 220 includes the fuel rods 221 and the stainless-steel rods 222. The stainless-steel rods 222 are placed in the perimetric region to face the reflector 40, but not placed in a region D, via which the center region of the ex-vessel instrument 50 and the center region of the second nuclear fuel assembly 220 are connected, so as not to interfere with neutrons irradiated toward the ex-vessel instrument 50.

According to the third embodiment, the fuel rods 221 may be arranged to increase the amount of neutrons in the ex-vessel instrument 50 without a separate neutron guide tube.

Typically, four ex-vessel instrument 50 are located outside the reactor main body 10 at angles of 45 degrees, 135 degrees, 225 degrees, and 315 degrees. According to this embodiment, the reflector 40 is reduced by the second nuclear fuel assembly 220, thereby facilitating the signal detection of the ex-vessel instrument 50 advantageous.

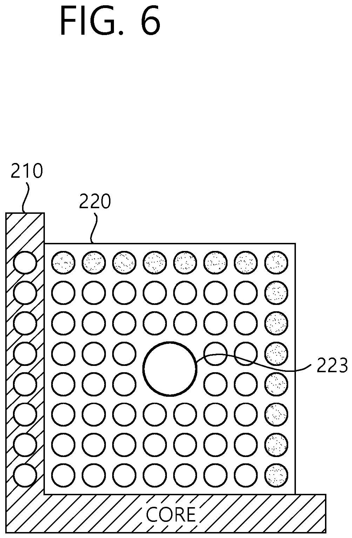

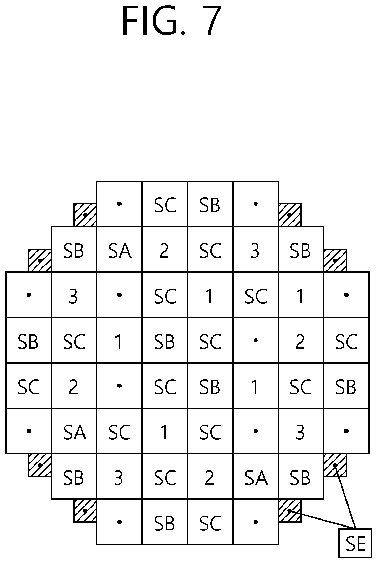

FIG. 6 illustrates a second nuclear fuel assembly in a small modular nuclear power plant according to a fourth embodiment of the disclosure, and FIG. 7 illustrates a nuclear fuel element in the small modular nuclear power plant according to the fourth embodiment of the disclosure.

In the fourth embodiment, a guiding tube 223 is provided for guiding the control rod to be inserted in the second nuclear fuel assembly 220.

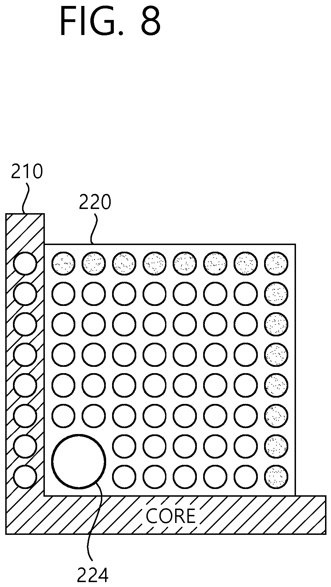

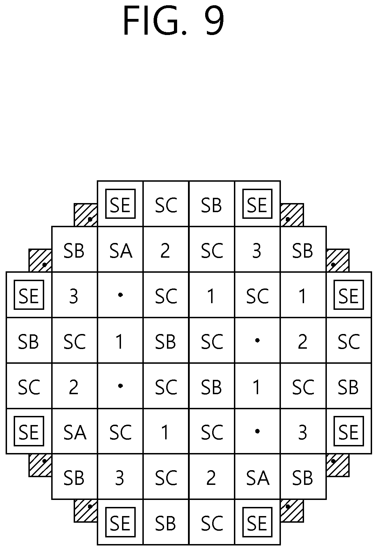

FIG. 8 illustrates a second nuclear fuel assembly in a small modular nuclear power plant according to a fifth embodiment of the disclosure, and FIG. 9 illustrates a nuclear fuel element in the small modular nuclear power plant according to the fifth embodiment of the disclosure.

In the fifth embodiment, an in-vessel instrument 224 is provided within the second nuclear fuel assembly 220.

According to the fourth or fifth embodiment, the control rod may be additionally inserted to thereby have the control rods to be driven in the core to spare, or the in-vessel instrument may be additionally loaded to thereby improve safety.

As described above, the most significant effect of the disclosure is to extend the cycle length by increasing the number of fuels in the core. Further, the cycle length may be extended without largely affecting the output distribution. The SMR, which needs to use many burnable absorber rods, may employ the disclosure to increase the cycle length. The small second nuclear fuel assemblies are loaded in the perimetric regions where the conventional first nuclear fuel assemblies have not been loaded. According to the sizes of the SMR, 4 to 16 small second nuclear fuel assemblies, in other words, 1 to 4 conventional fuel assemblies may be additionally loaded, thereby extending the cycle length by approximately 3% compared to that before the additional loading.

Meanwhile, there are no problems with core analysis even through the small second nuclear fuel assemblies are used. Because the core analysis is currently performed by subdividing the first nuclear fuel assembly into 1/4 fuel assemblies, modification in code or analysis method is not required even though the second nuclear fuel assemblies are added. Further, even though the size is reduced compared to the existing fuel from a thermal hydraulic point of view, there are no problems with applicability because a critical heat flux test is performed at the level of the second nuclear fuel assemblies.

As described above, the disclosure may promote increase in power generation period, improvement in monitoring ability based on the installation of additional in-vessel instrumentation assemblies or enhancement in safety based on extended control rods, and increase in signal strength of ex-vessel instrumentation assemblies.

The aforementioned embodiments are merely examples for describing the disclosure, and the disclosure is not limited thereto. Various modifications from these embodiments can be made by a person, who has ordinary knowledge in the art to which the disclosure pertains, to implement the disclosure, and thus the technical scope of the disclosure should be defined by the appended claims.

## Claims

1. A small modular nuclear power plant with small fuel assemblies, comprising:
a reactor main body; and
a nuclear fuel element accommodated in the reactor main body, comprising a plurality of fuel assemblies, and having a cross-sectional arrangement area,
the cross-sectional arrangement area comprising:
a first arrangement area; and
a plurality of second arrangement areas located in a perimetric region of the first arrangement area and spaced apart from each other, and
the fuel assemblies comprising:
first nuclear fuel assemblies each having a first size and densely arranged in the first arrangement area; and
second nuclear fuel assemblies each having a second size smaller than the first size and arranged in the second arrangement areas.

2. The small modular reactor of claim 1, wherein
each of the fuel assemblies is shaped like an elongated rectangular parallelepiped having a quadrangular cross-section, and
a cross-sectional size of the second nuclear fuel assembly is 15% to 50% of a cross-sectional size of the first nuclear fuel assembly.

3. The small modular reactor of claim 1, wherein
each of the fuel assembles has a square cross-section, and
a cross-sectional size of the second nuclear fuel assembly is 20 % to 30% of a cross-sectional size of the first nuclear fuel assembly.

4. The small modular reactor of claim 3, wherein
the perimetric region of the first arrangement area comprises a corner region in which the first nuclear fuel assemblies are arranged in a stepped form, and
the second arrangement areas are arranged to face two first nuclear fuel assemblies making up the corner region.

5. The small modular reactor of claim 1, further comprising a reflector located between the nuclear fuel element and the reactor main body, wherein
the second nuclear fuel assembly comprises a plurality of fuel rods and a plurality of stainless-steel rods, and
the stainless-steel rods are arranged to face the reflector.

6. The small modular reactor of claim 1, further comprising:
a reflector located between the nuclear fuel element and the reactor main body; and
an ex-vessel instrument located outside the reactor main body and placed to be adjacent to the second nuclear fuel assemblies, wherein
the second nuclear fuel assembly comprises a plurality of fuel rods and a plurality of stainless-steel rods, and
the stainless-steel rods are placed to face the reflector, but not placed in a region via which a center region of the ex-vessel instrument and a center region of the second nuclear fuel assembly are connected.

7. The small modular reactor of claim 1, further comprising either a guiding tube for guiding a control rod to be inserted or an in-vessel instrument, which is installed in the second nuclear fuel assembly.

8. A small modular reactor (SMR) with small fuel assemblies, comprising:
a reactor main body; and
a nuclear fuel element accommodated in the reactor main body, comprising a plurality of fuel assemblies, and having a cross-sectional arrangement area,
the fuel assembly comprising:
a first nuclear fuel assembly; and
a second nuclear fuel assembly having a smaller cross-sectional area than the first nuclear assembly,
the cross-sectional arrangement area comprising:
a first arrangement area in which the first nuclear fuel assemblies are arranged; and
a plurality of second arrangement areas, in which the second nuclear fuel assemblies are arranged, and which are located in a perimetric region of the first arrangement area and spaced apart from each other,
the first arrangement area has a circumference comprising:
a straight section in which the second nuclear fuel assemblies are arranged in a row; and
a stepped section in which the second nuclear fuel assemblies are arranged in a stepped form, and
the second arrangement area is located in the corner region.
